# FASCICULE DE BREVET EUROPEEN

(11) **EP 1 657 506 B1**
(45) Date de publication et mention de la délivrance du brevet: **21.03.2007**
(21) Numéro de dépôt: 05356198.1
(22) Date de dépôt: 14.11.2005
(51) Int. Cl.: F24F 13/072

(54) **Système de traitement de l'air d'un habitacle de véhicule de transport en commun**
Belüftungssystem für den Fahrgastraum eines öffentlichen Verkehrsmittels
Cabin ventilation system for a public transport vehicle

(30) Priorité: 15.11.2004 FR 0412078
(43) Date de publication de la demande: 17.05.2006
(73) Titulaire: Regie Autonome des Transports Parisiens, 75012 Paris (FR)
(72) Inventeur: Riachi, Youssef, 92130 Issy les Moulineaux (FR); Clodic, Denis, 75006 Paris (FR)
(74) Mandataire: Grand, Guillaume

(56) Documents cités:
- EP-A- 0 189 074
- EP-A- 0 818 336
- CH-A5- 670 498
- DE-A1- 10 258 748

## Description

La présente invention concerne un système de traitement de l'air d'un habitacle de véhicule de transport en commun, ainsi qu'un véhicule équipé d'un tel système et un procédé correspondant de traitement de l'air.

L'amélioration du confort des voitures de transport en commun, telles que les bus, les tramways et les voitures ferroviaires, constitue un double enjeu en ce qui concerne la satisfaction des passagers et l'attractivité des transports en commun, limitant ainsi indirectement l'usage de véhicules privés.

La circulation d'air dans un habitacle de véhicule de grande taille recevant des charges thermiques extrêmement variables, dues notamment au flux solaire et au nombre d'occupants, pose des problèmes aérauliques importants. Typiquement, la hauteur d'une voiture de transport en commun varie entre 2,10 et 2,50 mètres, sa largeur entre 2 et 3 mètres et sa longueur entre 12 et 25 mètres. De l'air est donc à faire circuler dans des volumes qui varient entre 50 et 200 m³ environ, ce qui, pour un système embarqué de filtration, de refroidissement et/ou de chauffage, implique de fortes contraintes de réalisation, liées au confort thermique des occupants, à la qualité de l'air dans l'habitacle et à l'efficacité énergétique du système.

Les documents US-B-6,745,586, US-B-6,709,328, EP-A-0 613 796, US-A-4,201,064 et EP-A-0 014 777 décrivent des systèmes de traitement de l'air d'un bus de transport en commun. Après avoir filtré, chauffé et/ou refroidi l'air à envoyer dans l'habitacle du bus, ces systèmes envoient cet air dans des conduits destinés à distribuer l'air en différents points de l'habitacle. La répartition de l'air traité est cependant limitée puisque, en pratique, seules les parties du volume de l'habitacle situées juste à proximité de ces conduits, c'est-à-dire les zones de l'habitacle directement soumises à l'air évacué de ces conduits, sont efficacement purifiées, chauffées et/ou refroidies. En outre, le fonctionnement de ces systèmes conduit à des courts-circuits entre l'air traité distribué et de l'air repris à l'intérieur de l'habitacle en vue d'être traité. C'est en particulier le cas pour les systèmes agencés en totalité au niveau du plafond de l'habitacle. Il en résulte des pertes d'efficacité énergétique et un confort moindre pour les occupants de l'habitacle.

DE-A-102 58 748 propose un système de traitement, comportant un conduit de distribution d'air, agencé au niveau du plafond d'un véhicule. En service, ce conduit génère des turbulences dans le volume d'air traité, permettant ainsi une certaine homogénéisation de l'air dans l'habitacle. Cependant, en pratique, l'air distribué tend à se concentrer en une ou plusieurs régions longitudinales limitées du conduit car ce dernier ne présente aucun aménagement interne spécifique, ce qui induit que de larges sous-volumes du véhicule ne sont pas efficacement ventilés.

Le but de l'invention est de proposer un système de traitement qui améliore significativement les conditions de confort des occupants de l'habitacle, avec une consommation énergétique la plus faible possible.

A cet effet, l'invention a pour objet un système de traitement de l'air d'un habitacle de véhicule de transport en commun, tel que défini à la revendication 1.

En fonctionnement, le système de traitement selon l'invention génère des tourbillons avec l'air traité sortant de la gaine du ou de chaque conduit de distribution. Grâce au diffuseur interne, cet air sortant est réparti de manière sensiblement homogène sur la longueur du conduit, avec une faible perte de charge. La vitesse de l'air en sortie du conduit est rapidement amortie, par effet de turbulences, pour ne pas créer d'inconfort dû aux courants d'air pour les passagers. Les tourbillons générés permettent en outre une diffusion rapide et homogène de l'air traité dans un grand volume d'air associé au conduit, et pas uniquement à l'aplomb direct de ce conduit.

D'autres caractéristiques de ce système, prises isolément ou selon toutes les combinaisons techniquement possibles, sont énoncées aux revendications dépendantes 2 à 11.

L'invention a également pour objet un véhicule de transport en commun, délimitant un habitacle équipé d'un système de traitement de l'air tel que défini ci-dessus.

L'invention a en outre pour objet un procédé de traitement de l'air d'un habitacle de véhicule de transport en commun, notamment mis en oeuvre par le système défini ci-dessus, tel que défini à la revendication 13.

Une caractéristique avantageuse du procédé est énoncée à la revendication dépendante 14.

L'invention sera mieux comprise à la lecture de la description qui va suivre, donnée uniquement à titre d'exemple et faite en se référant aux dessins sur lesquels :
- la figure 1 est une vue schématique en perspective de l'habitacle d'un bus de transport en commun, équipé d'un système de traitement selon l'invention ;
- la figure 2 est une vue schématique en élévation d'une partie du système de traitement de la figure 1 ;
- les figures 3A et 3B sont des vues en perspective, sous des angles de vue respectifs différents, d'un conduit de distribution du système de traitement de la figure 1, représenté partiellement en arraché ;
- la figure 4 est une vue schématique en perspective d'un composant interne du conduit de distribution des figures 3A et 3B ; et
- la figure 5 est une coupe schématique prise suivant un plan vertical V de la figure 1, illustrant la circulation de l'air distribué par une partie du système de traitement de la figure 1.

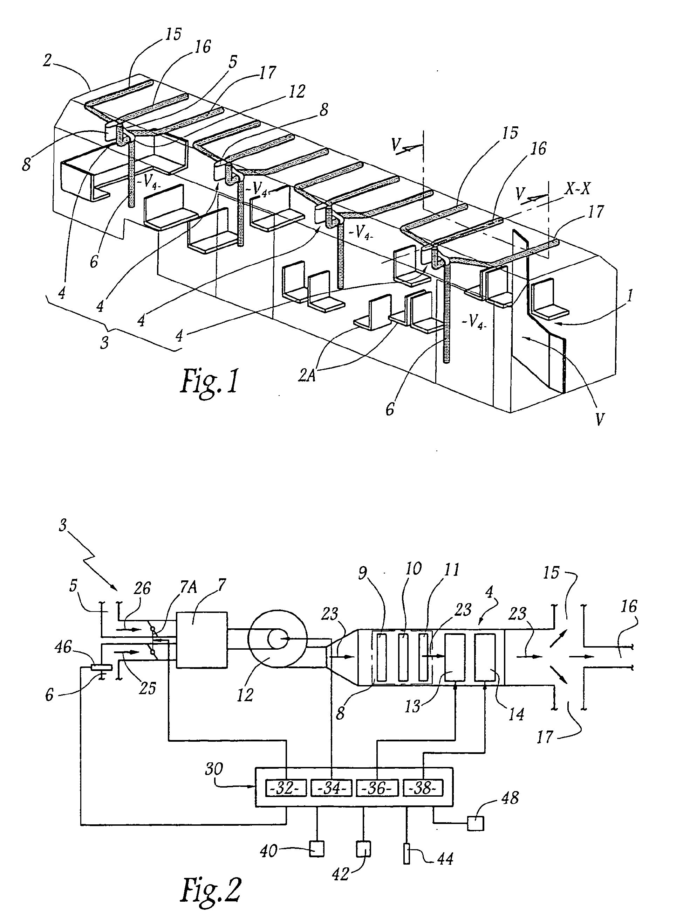

Sur la figure 1 est représenté un habitacle 1 d'un bus de transport en commun 2 dans lequel des occupants se tiennent debout ou sont assis sur des sièges 2A. Cet habitacle est équipé d'un système 3 de traitement de son air intérieur, comportant quatre unités de traitement 4. Chacune de ces unités 4 constitue un motif reproductible pouvant être étendu ou réduit en fonction du volume d'air total V de l'habitacle à traiter, chaque unité étant ainsi associé à un volume élémentaire V₄ correspondant à une fraction du volume total.

Le bus 2 ne sera pas décrit plus avant, étant entendu qu'il présente une structure globale conventionnelle, en particulier en ce qui concerne son habitacle 1 délimité par un plafond, un plancher et des parois latérales non représentés en détail. Par commodité, les termes « haut », « bas » et analogues s'entendent, par la suite, par rapport au sol sur lequel le bus repose en usage normal. De même, les termes « vertical » et « horizontal » se rapportent respectivement à des directions sensiblement perpendiculaire et sensiblement parallèle au sol.

Comme représenté plus en détail sur la figure 2, chaque unité 4 comprend :
- un conduit 5 d'admission d'air neuf, dont l'extrémité amont débouche à l'extérieur du bus 2, notamment au-dessus du toit de l'habitacle 1 comme représenté à la figure 1 ;
- un conduit 6 de reprise d'air, dont l'extrémité amont débouche dans la partie basse de l'habitacle 1, notamment au niveau du plancher de cet habitacle, la partie courante de ce conduit 6 se présentant, par exemple, sous la forme d'une barre sensiblement verticale agencée à l'intérieur de l'habitacle et pouvant être agrippée par les occupants du bus 2 ;
- une chambre 7 de mélange d'air neuf et d'air repris, dans laquelle débouchent les extrémités aval des conduits 5 et 6 ;
- un volet 7A de réglage du rapport des débits d'air neuf et d'air repris, agencé de manière mobile au niveau des extrémités aval des conduits 5 et 6 ;
- un caisson de filtration 8 disposé sur le trajet d'écoulement de l'air en aval de la chambre de mélange 7 et incluant trois organes de filtration successive 9, 10 et 11, aptes à retenir des impuretés de l'air de tailles respectivement décroissantes ;
- un ventilateur 12 à vitesse variable, agencé entre la chambre de mélange 7 et le caisson de filtration 8 et apte à aspirer l'air en sortie de la chambre et à l'envoyer avec une légère surpression vers le caisson ;
- une batterie froide 13 constituée, par exemple, de l'évaporateur d'une machine frigorifique à compression ;
- une batterie chaude 14 constituée, par exemple, d'une batterie de chauffage électrique ou d'une batterie raccordée au circuit de refroidissement du moteur du bus 2 ; et
- trois conduits essentiellement horizontaux 15, 16 et 17 de distribution, dans l'habitacle 1, de l'air sortant des batteries 13 et 14, qui s'étendent parallèlement les uns aux autres, suivant une direction sensiblement perpendiculaire à la direction longitudinale du bus 2, et qui sont agencés dans la partie haute de l'habitacle 1, c'est-à-dire au-dessus du volume d'air à traiter V₄, en étant par exemple fixé à la face intérieure du plafond du bus comme à la figure 1.

Le système 3 de la figure 1 comporte ainsi douze conduits de distribution 15, 16 et 17 s'étendant suivant la largeur de l'habitacle 1. D'autres configurations de ces conduits de distribution sont envisageables, leur nombre pouvant être augmenté ou réduit et leur implantation pouvant être prévue suivant la longueur de l'habitacle 1, en fonction de la taille de l'habitacle 1 et/ou des contraintes d'installation dans le bus 2.

Au sein du caisson de filtration 8, l'élément 9 permet d'éliminer les poussières grossières et l'élément 10 permet d'éliminer les poussières plus fines et les pollens tandis que l'élément 11, comprenant en particulier du charbon actif, permet d'éliminer les macro-mollécules, notamment les macro-mollécules odorantes. Avantageusement, un moyen, non représenté, de mesure de perte de pression prenant en compte les pressions en amont et en aval du caisson de filtration 8 est installé pour indiquer le nécessaire changement des éléments de filtration à partir d'un seuil d'accroissement de la perte de pression.

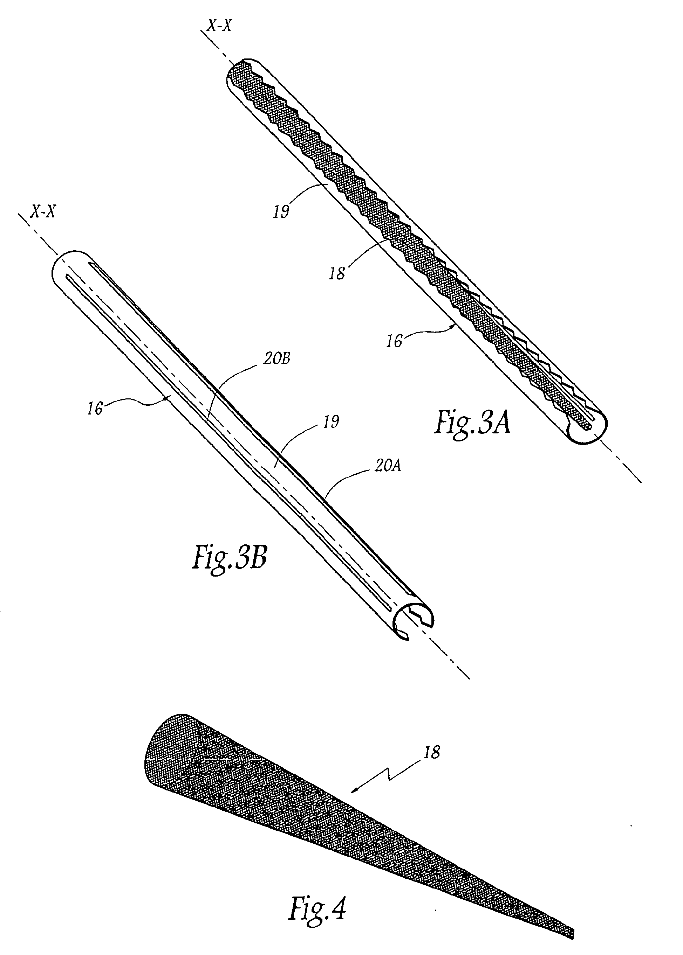

Chaque conduit de distribution 15, 16 et 17 est adapté pour distribuer dans l'habitacle 1 l'air traité par les composants 8, 13 et/ou 14, de manière sensiblement homogène sur toute la longueur du conduit. A cet effet, chaque conduit présente des aménagements spécifiques, identiques d'un conduit à l'autre et détaillés ci-dessous en regard des figures 3 à 5 pour le conduit 16 dont l'axe central longitudinal est noté X-X.

Pour assurer un débit d'air distribué sensiblement homogène suivant la longueur du conduit 16, ce dernier est muni intérieurement d'un diffuseur 18 présentant une forme globale de cône ou de tronc de cône d'axe longitudinal sensiblement confondu avec l'axe X-X et convergent vers l'extrémité aval du conduit. Ainsi, l'extrémité du diffuseur 18 de plus grand diamètre est agencée au niveau de l'extrémité amont du conduit 16 de manière à être alimenté par l'air traité provenant des composants 8, 13 et 14 de l'unité 4. Les longueurs du conduit et du diffuseur sont sensiblement égales.

Ce diffuseur est constitué d'un tissu maillé avec une porosité prédéfinie, valant de 25 à 40%, cette porosité étant quantifiée par la formule 1-(Annd/4) où d est le diamètre du fil du tissu, n le nombre de fils par mètre de diffuseur et A un facteur de correction égal, en pratique, à 1,05 environ. Cette formule est parfois appelée formule de « Marcus ». Avantageusement, le tissu utilisé est du polypropylène ou du polyéthylène.

La forme conique ou tronconique de ce diffuseur assure à la fois une distribution sensiblement égale du débit d'air, aussi bien dans les parties amont, courante et aval du conduit, et minimise les pertes de charge de l'air diffusé. A cet effet, des expérimentations ont permis de définir qu'un rapport de section de 1/10^{ème} par mètre, pour la porosité prédéfinie, assure une distribution d'air sensiblement homogène suivant la direction X-X. Ce rapport de section signifie que si, par exemple, la section est de 100 cm² a une abscisse x, la section à une abscisse x + 1 mètre est de 10 cm² environ.

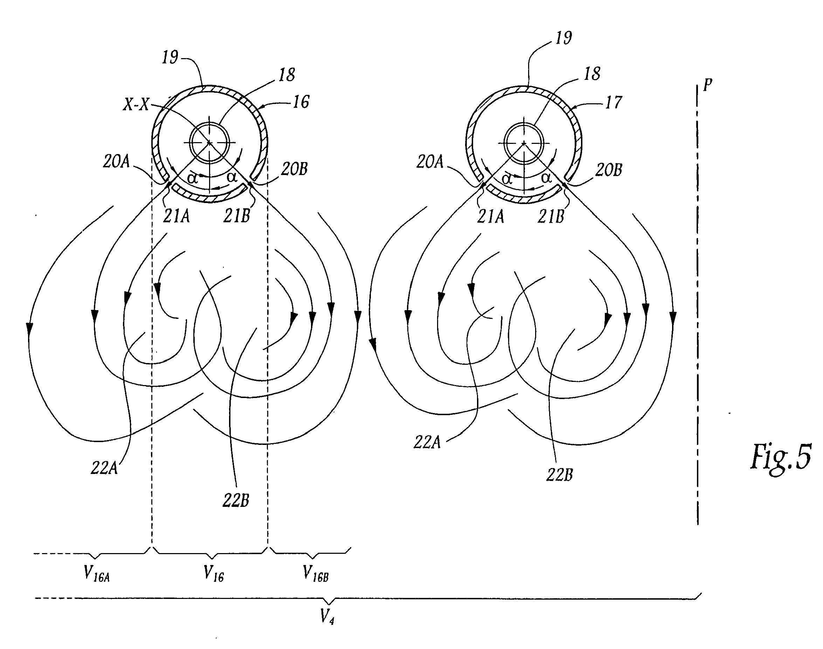

Le conduit de distribution 16 comporte également une gaine externe 19 de forme globalement cylindrique d'axe X-X, à l'intérieur de laquelle est placé le diffuseur tronconique 18 de manière sensiblement co-axiale. Comme représenté à la figure 5, cette gaine est située à l'aplomb vertical d'une première partie V₁₆ du volume V₄, cette partie V₁₆ correspondant à la projection sensiblement verticale de la gaine 19 dans le volume d'air à traiter V₄.

Dans sa moitié dirigée vers le volume V₄, la gaine 19 est fendue sur l'essentiel de sa longueur, en formant des fentes référencées 20A et 20B. En coupe transversale, comme à la figure 5, chaque fente 20A, 20B constitue, pour la gaine 19, un orifice traversant radial par rapport à l'axe X-X, dont la direction est inclinée par rapport à la verticale en formant un angle α. De cette façon, l'air évacué le long de la gaine par chaque fente 20A, 20B ne converge pas, en sortie de cette gaine, vers la partie de volume V₁₆, mais est dirigé, comme indiqué par la flèche 21A, 21B, vers une autre partie du volume V₄, adjacente à la partie V₁₆ et référencée V_{16A} et V_{16B} à la figure 5. L'air ainsi évacué en biais vis-à-vis de la partie de volume V₁₆ génère un flux tourbillonnaire 22A, 22B qui s'enroule à la fois dans la partie de volume adjacente V_{16A}, V_{16B} et dans la partie de volume V₁₆. Ces tourbillons résultent du fait que le flux d'air évacué de chaque fente 20A, 20B est confronté, en s'éloignant de la gaine, soit à un flux d'air analogue évacué du conduit de distribution adjacent, comme pour les jets d'air 21B et 21A respectivement évacués des conduits 16 et 17 à la figure 5, soit à une paroi verticale P délimitant l'habitacle 1, comme pour le jet d'air 21B évacué du conduit 17 à la figure 5.

En fonctionnement, chaque unité de traitement 4 alimente ses conduits de diffusion 15, 16 et 17 avec de l'air à la fois entraîné par le ventilateur 12, filtré par le caisson 8 et refroidi par la batterie 13 ou réchauffé par la batterie 14, comme indiqué par les flèches 23 à la figure 2. Cet air traité est réparti de manière sensiblement homogène sur toute la longueur des conduits de distribution grâce aux diffuseurs 18, avec une faible perte de charge. L'air distribué en sortie des gaines 19 de ces conduits génère, grâce aux fentes inclinées 20A et 20B, des flux tourbillonnaires 22A, 22B qui permettent une diffusion bien homogène de l'air dans le volume V₄.

La génération des flux tourbillonnaires 22A, 22B nécessite que la vitesse d'éjection de l'air au niveau des fentes 20A et 20B soit relativement élevée, de l'ordre de 5 à 10 mètres par seconde. Cependant, les turbulences au sein de ces flux tourbillonnaires amortissent très rapidement la vitesse de l'air distribué, ne créant ainsi aucune gêne de type courant d'air pour les occupants du bus 2. Des expérimentations ont mis en évidence que l'angle α d'inclinaison des fentes 20A, 20B vaut avantageusement entre 40 et 50°. De préférence, α vaut 45° environ. Dans ces conditions, on a mesuré qu'en un point situé à environ 20 cm de la gaine 19, le module du vecteur vitesse de l'air distribué dans l'habitacle 1 n'est plus que de l'ordre de 0,2 à 0,3 mètre par seconde, ne générant ainsi aucun effet de courant d'air pour les passagers.

En pratique, différents paramètres géométriques des conduits de distribution 15, 16, 17. peuvent être modifiés pour s'adapter au mieux à l'habitacle dont l'air est à traiter. En particulier, les valeurs de l'espacement entre deux conduits adjacents et de l'angle α peuvent être ajustées afin de réduire la zone morte entre les conduits de distribution, par la génération de tourbillons qui se rejoignent d'un conduit à l'autre. De même, la largeur des fentes 20A, 20B est choisie en fonction de la longueur du conduit et du débit d'air à distribuer, de sorte que la vitesse d'éjection de l'air en sortie du conduit reste comprise entre 5 et 10 m/s. Ces valeurs sont par exemple établies par calcul, notamment par simulation numérique.

En plus des effets des flux tourbillonnaires décrits ci-dessus, la répartition de l'air traité par chaque unité 4 au sein de son volume d'air associé V₄ est améliorée par la reprise d'air intérieur à l'habitacle dans la partie basse de ce dernier, au niveau de l'extrémité amont du conduit de reprise 6. L'air traité circule ainsi du haut vers le bas, balayant verticalement tout le volume V₄. En outre, chaque unité 4 mélange, au niveau de sa chambre 7, cet air repris, indiqué par la flèche 25, avec de l'air neuf prélevé à l'extérieur de l'habitacle 1, indiqué par la flèche 26, au moyen du conduit d'admission 5. Les proportions respectives d'air repris et d'air neuf sont fixées par la position du volet de réglage 7A.

Comme l'air distribué par chaque unité de traitement 4 intègre une partie d'air repris préalablement soufflé dans l'habitacle par les conduits de distribution 15, 16, 17, l'énergie nécessaire au ventilateur 12 pour faire circuler l'air est réduite, limitant ainsi la consommation énergétique du système 3.

Selon un second aspect avantageux de l'invention, le système de traitement 3 comporte un régulateur électronique 30. Ce régulateur est prévu pour commander le fonctionnement des unités de traitement 4 et, bien que représenté, à la figure 2, en lien avec une seule de ces unités 4, le régulateur 30 est avantageusement commun aux quatre unités de traitement 4.

Le régulateur 30 est adapté pour ajuster, au niveau de chaque unité de traitement 4, les proportions d'air neuf et d'air repris à traiter, le débit d'air distribué et la puissance fournie aux batteries froide 13 et chaude 14 en vue de maintenir les conditions d'hygiène et de confort pour les passagers et de minimiser la consommation d'énergie du système de traitement 3.

A cet effet, le régulateur 30 inclut, pour chaque unité de traitement 4, un module 32 de régulation de la chambre de mélange 7, un module 34 de régulation du ventilateur 12, un module 36 de régulation de la batterie froide 13 et un module 38 de régulation de la batterie chaude 14. Le régulateur 30 est en outre associé à différents capteurs et interfaces de réglage, qui sont détaillés ci-dessous dans le cadre de la description d'un exemple de régulation en mode rafraîchissement, c'est-à-dire d'une régulation visant à ce que la température de l'air distribué soit abaissée au plus près d'une température de consigne froide, saisie par exemple au niveau d'un boîtier de consigne 40.

Pour mieux comprendre cet exemple, on considère que la batterie froide 13 est de type machine frigorifique à compression, c'est-à-dire qu'elle agit sur l'air la traversant pour en abaisser la valeur de température au moyen d'un circuit fermé de fluide frigorigène circulant successivement dans un compresseur, un condenseur, une vanne de détente et un évaporateur.

Dans un premier temps, le régulateur 30 calcule la charge thermique du volume V₄ et le débit d'air minimal d'un point de vue hygiénique pour traiter ce volume, en fonction :
- du nombre de passagers présents dans le volume V₄, déterminé par un capteur associé 42,
- de la valeur de température de l'air à l'extérieur de l'habitacle 1, mesurée par un capteur 44,
- de la valeur de température de l'air repris dans le conduit 6, mesurée par un capteur 46.

Sur la base du débit d'air neuf minimal pour renouveler l'air dans le volume V₄, calculé par le régulateur 30 en fonction du nombre de passagers, le module de régulation 32 modifie la position du volet 7A et impose ainsi les proportions d'air neuf et d'air repris admis dans la chambre de mélange 7. En outre, si la valeur de température de l'air extérieur est plus basse que la valeur de température de l'air repris, le régulateur 30 conclut qu'il est possible d'obtenir un effet de refroidissement « gratuit », c'est-à-dire non consommateur d'énergie, en augmentant le débit d'air neuf admis, par un déplacement correspondant du volet 7A.

En fonction à la fois du rapport air neuf/air repris imposé par le volet 7A, du flux solaire auquel est soumis l'habitacle 1, mesuré par un capteur solaire 48, et de la quantité de chaleur excédentaire présente dans le volume V₄, déduite par le régulateur 30 de la comparaison des valeurs des températures de consigne et d'air repris, le module de régulation 34 ajuste le débit de soufflage de l'air traité en modifiant la tension d'alimentation du ventilateur 12. A titre d'exemple, le besoin en air neuf par passager peut être considéré à environ 20 m³/heure. Si, par exemple, le débit d'air soufflé par le ventilateur 12 peut varier entre 1000 et 2000 m³/heure, le module 34 applique la formule 1000x(1 + Np/Nm), avec Np = nombre de passagers présents et Nm nombre maximal de passagers admissibles, pour commander le ventilateur 12.

Dans un second temps, le module de régulation 36 vise à minimiser la consommation énergétique de la machine frigorifique à compression 13 et comporte à cet effet un sous-module de régulation du condenseur de cette machine et un sous-module de régulation du compresseur de la machine. Plus précisément, le sous-module de régulation du condenseur est constitué d'une boucle indépendante utilisant les valeurs des températures de l'air à l'extérieur de l'habitacle 1 et du fluide frigorigène dans la partie haute pression du circuit du condenseur. A partir de ces deux données, la tension d'alimentation d'un ventilateur à vitesse variable associé au condenseur est ajustée. Le sous-module de régulation du compresseur fait, quant à lui, varier le volume balayé du compresseur, via une électrovanne associée dont la technologie est connue et disponible sur le marché pour les compresseurs à volume variable. Les paramètres utilisés par le sous-module de régulation du compresseur sont le débit d'air soufflé sur l'évaporateur de la machine frigorifique 13, l'écart entre les valeurs des températures de consigne et d'air soufflé sur l'évaporateur, la vitesse de rotation du compresseur et les valeurs des pressions d'évaporation et de condensation du fluide frigorigène. Sur la base de ces paramètres et en intégrant les caractéristiques du compresseur, à savoir son rendement global et son rendement volumétrique, le régulateur 30 est à même de fixer une tension de pilotage de l'électrovanne précitée, qui commande le volume balayé du compresseur et, par là, ajuste le débit de fluide frigorigène comprimé.

Considérons, à titre d'exemple, qu'un appel de puissance frigorifique de l'ordre du tiers de la puissance maximale soit envisagée. Dans ce cas, le nombre de passagers est réduit, la température extérieure est par exemple de 25°C et la température de consigne dans le bus est également de 25°C. La machine frigorique 13 n'a alors qu'à compenser la charge solaire entrante et les charges thermiques liées au nombre de passagers présents. La température de soufflage vaut alors par exemple 17°C et, selon la vitesse de rotation du compresseur, l'électrovanne de commande va régler le volume balayé du compresseur à simplement le tiers de sa cylindrée maximale.

Ainsi, le régulateur 30 modifie, pour chaque unité de traitement 4, le débit d'air traité par cette unité et la température de cet air en fonction du nombre de passagers présents dans le volume d'air associé à l'unité et du flux thermique auquel est soumis ce volume V₄, tout en minimisant les consommations énergétiques de l'unité en les adaptant aux besoins réels de traitement de l'air, par modulation du débit de fluide frigorigène dans le compresseur de la machine frigorifique 13 et par modulation de la tension d'alimentation du ventilateur 12.

Une régulation en mode chauffage utilise les mêmes variables détaillées ci-dessus, mais en vue d'augmenter la valeur de température de l'air distribué par le système 3 jusqu'à la température de consigne chaude.

Le fait de prendre en compte le nombre de passagers présents dans l'habitacle 1 est particulièrement utile puisque la densité d'occupation d'un véhicule de transport en commun tel que le bus 2 peut varier de 0,3 à 3 personnes au m². Ce facteur dix implique des variations considérables de la charge thermique, ainsi que de fortes variations de promiscuité et donc d'exigence d'hygiène.

Divers aménagements et variantes au système de traitement 3 décrit ci-dessus sont en outre envisageables :
- les batteries froide 13 et chaude 14 peuvent être remplacées par un système de pompe à chaleur, pouvant être basculé d'un mode rafraîchissement en été à un mode chauffage en hiver ; et/ou
- le nombre et la géométrie des orifices d'évacuation de l'air traité à travers la gaine externe 19 des conduits de distribution 15, 16, 17 peuvent être modifiés pour s'adapter notamment à la longueur des conduits.

## Revendications

1. Système (3) de traitement de l'air d'un habitacle (1) de véhicule de transport en commun (2), comprenant au moins une unité (4) de traitement d'un volume d'air (V₄) de l'habitacle, qui inclut au moins un conduit (15, 16, 17) de distribution d'air traité dans le volume d'air, disposé à l'aplomb d'une première partie (V₁₆) du volume d'air et comportant une gaine externe (19) allongée et ajourée suivant sa longueur, l'air évacué le long de cette gaine étant, en sortie de la gaine, dirigé au moins en partie vers une seconde partie (V_{16A}, V_{16B}) du volume d'air (V₄), distincte de la première partie (V₁₆), pour générer au moins un flux tourbillonnaire (22A, 22B) dans les première et seconde parties du volume d'air
**caractérisé en ce que** le ou chaque conduit de distribution (15, 16, 17) comporte en outre un diffuseur interne (18) entouré par la gaine (19), constitué d'un tissu poreux, de forme sensiblement tronconique d'axe longitudinal (X-X) disposé suivant la longueur de la gaine et adapté, pour, lorsqu'il est alimenté en air au niveau de sa base, répartir l'air qu'il diffuse de manière sensiblement homogène suivant sa longueur.

2. Système suivant la revendication 1, **caractérisé en ce que** la gaine externe (19) délimite au moins une fente longitudinale (20A, 20B) qui traverse ladite gaine suivant une direction transversale à la direction longitudinale (X-X) de la gaine.

3. Système suivant la revendication 2, **caractérisé en ce que** ladite direction de la fente (20A, 20B) forme un angle (α) de valeur comprise entre 40 et 50° par rapport à la verticale, de préférence un angle valant 45°.

4. Système suivant l'une quelconque des revendications précédentes, **caractérisé en ce que** le rapport de section du diffuseur tronconique (18) vaut 1/10^{ème} par mètre suivant la longueur du diffuseur.

5. Système suivant l'une quelconque des revendications précédentes, **caractérisé en ce que** le diffuseur tronconique (18) présente une porosité de valeur comprise entre 25 et 40%.

6. Système suivant l'une quelconque des revendications précédentes, **caractérisé en ce que** la ou chaque unité de traitement (4) inclut, en amont du ou des conduits de distribution (15, 16, 17), des moyens (8) de filtration d'air, comprenant de préférence plusieurs éléments de filtration (9, 10, 11) adaptés pour filtrer successivement des impuretés de tailles respectivement décroissantes.

7. Système suivant l'une quelconque des revendications précédentes, **caractérisé en ce que** la ou chaque unité de traitement (4) inclut des moyens (6) de reprise d'air du côté du volume d'air (V₄), opposé au(x) conduit(s) de distribution (15, 16, 17).

8. Système suivant la revendication 7, **caractérisé en ce que** la ou chaque unité de traitement (4) inclut une chambre (7) de mélange d'air neuf prélevé à l'extérieur de l'habitacle (1) et d'air provenant des moyens de reprise (6).

9. Système suivant la revendication 8, **caractérisé en ce qu'**il comporte des moyens (7A, 30, 32) de commande des proportions d'air neuf et d'air repris admis dans la chambre de mélange (7), régulés en fonction d'au moins le nombre de personnes présentes dans le volume d'air (V₄).

10. Système suivant l'une quelconque des revendications précédentes, **caractérisé en ce que** la ou chaque unité de traitement (4) inclut des moyens de chauffage (13) et/ou de refroidissement (14) de l'air à traiter.

11. Système suivant les revendications 8 et 10, **caractérisé en ce qu'**il comporte des moyens électroniques (30) de régulation de la ou chaque unité de traitement (4), adaptés pour commander à la fois les proportions d'air neuf et d'air repris admis dans la chambre de mélange (7), le débit d'air traité envoyé au(x) conduit(s) de distribution (15, 16, 17) et l'énergie fournie aux moyens de chauffage (13) et/ou de refroidissement (14), en fonction d'au moins le nombre de personnes présentes dans le volume d'air (V₄) associé à l'unité de traitement, du flux solaire auquel est soumis l'habitacle (1), de la température ambiante à l'extérieur de l'habitacle et d'une valeur de consigne déterminée pour la température de l'air traité.

12. Véhicule de transport en commun (2), délimitant un habitacle (1) équipé d'un système (3) de traitement de l'air conforme à l'une quelconque des revendications précédentes.

13. Procédé de traitement de l'air d'un habitacle (1) de véhicule de transport en commun (2), dans lequel on alimente en air traité au moins un conduit de distribution (15, 16, 17) disposé à l'aplomb d'une première partie (V₁₆) d'un volume d'air (V₄) de l'habitacle et on évacue l'air traité le long du ou de chaque conduit en dirigeant au moins en partie cet air, en sortie du conduit, vers une seconde partie (V_{16A}, V_{16B}) du volume d'air (V₄), distincte de la première partie (V₁₆), pour générer au moins un flux tourbillonnaire (22A, 22B) dans les première et seconde parties du volume d'air,
**caractérisé en ce qu'**on répartit l'air alimentant le ou chaque conduit de distribution (15, 16, 17) de manière sensiblement homogène suivant la longueur du conduit en utilisant un diffuseur (18) dont est muni intérieurement le conduit, constitué d'un tissu poreux et présentant une forme sensiblement tronconique d'axe longitudinal (X-X) disposé suivant la longueur du conduit.

14. Procédé suivant la revendication 13, **caractérisé en ce que** la vitesse d'évacuation de l'air en sortie du ou de chaque conduit de distribution (15, 16, 17) est comprise entre 5 et 10 mètres par seconde.

## Claims

1. System (3) for treating the air from a passenger compartment (1) of a public service vehicle (2), comprising at least one unit (4) for treating a volume of air (V₄) from the passenger compartment which includes at least one duct (15, 16, 17) for distribution of treated air into the volume of air, disposed perpendicularly to a first part (V₁₆) of the volume of air and comprising an external casing (19) which is elongated and perforated along the length thereof, the air evacuated along this casing being, at the outlet of the casing, directed at least in part towards a second part (V_{16A}, V_{16B}) of the volume of air (V₄), separate from the first part (V₁₆), in order to generate at least one turbulent flow (22A, 22B) in the first and second parts of the volume of air,
**characterised in that** the or each distribution duct (15, 16, 17) comprises in addition an internal diffuser (18), surrounded by the casing (19), comprising a porous material, of an approximately tapered shape with a longitudinal axis (X - X) which is disposed along the length of the casing and adapted for the purpose, when it is supplied with air at the level of the base thereof, of distributing the air which it diffuses in an approximately homogeneous manner along the length thereof.

2. System according to claim 1, **characterised in that** the external casing (19) delimits at least one longitudinal slot (20A, 20B) which traverses said casing along a direction which is transverse relative to the longitudinal direction (X - X) of the casing.

3. System according to claim 2, **characterised in that** said direction of the slot (20A, 20B) forms an angle (α) of a value between 40 and 50° relative to the vertical, preferably an angle equating to 45°.

4. System according to any of the preceding claims, **characterised in that** the section ratio of the tapered diffuser (18) equates to 1/10^{th} per metre along the length of the diffuser.

5. System according to any of the preceding claims, **characterised in that** the tapered diffuser (18) has a porosity of a value between 25 and 40%.

6. System according to any of the preceding claims, **characterised in that** the or each treatment unit (4) includes, upstream of the distribution duct(s) (15, 16, 17), air filtration means (8), comprising preferably a plurality of filtration elements (9, 10, 11) which are adapted to filter successively impurities of sizes which decrease respectively.

7. System according to any of the preceding claims, **characterised in that** the or each treatment unit (4) includes means (6) for recovering air in the direction of the volume of air (V₄) which is opposite to the distribution duct(s) (15, 16, 17).

8. System according to claim 7, **characterised in that** the or each treatment unit (4) includes a chamber (7) for mixing fresh air taken from outside the passenger compartment (1) and air from the recovery means (6).

9. System according to claim 8, **characterised in that** it comprises means (7A, 30, 32) for controlling the proportions of fresh air and recovered air which are admitted into the mixing chamber (7), controlled as a function of at least the number of persons present in the volume of air (V4).

10. System according to any of the preceding claims, **characterised in that** the or each treatment unit (4) includes means for heating (13) and/or cooling (14) the air to be treated.

11. System according to claims 8 and 10, **characterised in that** it comprises electronic means (30) for controlling the or each treatment unit (4), which are adapted to control simultaneously the proportions of fresh air and recovered air which are admitted into the mixing chamber (7), the quantity of treated air which is delivered to the distribution duct(s) (15, 16, 17) and the energy supplied to the heating (13) and/or cooling (14) means, as a function of at least the number of persons present in the volume of air (V₄) associated with the treatment unit, of the solar flux to which the passenger compartment (1) is subjected, of the ambient temperature outside the passenger compartment and of a reference value determined for the temperature of the treated air.

12. Public service vehicle (2) delimiting a passenger compartment (1) equipped with an air treatment system (3) according to any of the preceding claims.

13. Method for treating the air from a passenger compartment (1) of a public service vehicle (2) in which treated air is supplied to at least one distribution duct (15, 16, 17) which is disposed perpendicularly to a first part (V₁₆) of a volume of air (V₄) from the passenger compartment, and the treated air is evacuated along the or each duct by directing this air at least in part, at the outlet of the duct, towards a second part (V_{16A}, V_{16B}) of the volume of air (V₄), separate from the first part (V₁₆) , in order to generate at least one turbulent flow (22A, 22B) in the first and second parts of the volume of air,
**characterised in that** the air supplying the or each distribution duct (15, 16, 17) is distributed in an approximately homogeneous manner along the length of the duct by using a diffuser (18), with which the duct is equipped in the interior, comprising a porous material and having an approximately tapered shape with a longitudinal axis (X - X) which is disposed along the length of the duct.

14. Method according to claim 13, **characterised in that** the speed of evacuation of the air at the outlet of the or of each distribution duct (15, 16, 17) is between 5 and 10 metres per second.

## Patentansprüche

1. System (3) zur Behandlung der Luft eines Fahrgastraumes (1) eines öffentlichen Verkehrsmittels (2), umfassend mindestens eine Einheit (4) zur Behandlung eines Luftvolumens (V₄) des Fahrgastraumes, die mindestens einen Kanal (15, 16, 17) zur Verteilung von behandelter Luft in dem Luftvolumen einschließt, der in lotrechter Richtung eines ersten Teils (V₁₆) des Luftvolumens angeordnet ist und eine lang gestreckte und über ihre Länge durchbrochene Außenhülle (19) umfasst, wobei die längs dieser Hülle ausströmende Luft am Austritt der Hülle zumindest teilweise zu einem zweiten Teil (V_{16A}, V_{16B}) des Luftvolumens (V₄) unterschiedlich zum ersten Teil (V₁₆) gerichtet ist, um mindestens eine turbulente Strömung (22A, 22B) in dem ersten und zweiten Teil des Luftvolumens zu erzeugen,
**dadurch gekennzeichnet, dass** der oder jeder Verteilungskanal (15, 16, 17) außerdem einen Innendiffusor (18) umfasst, der von der Hülle (19) umgeben ist und aus einem porösen Gewebe mit einer im Wesentlichen kegeligen Form besteht, mit einer Längsachse (X-X), die gemäß der Länge der Hülle (19) angeordnet ist und der, wenn er mit Luft an seiner Basis versorgt wird, geeignet ist, die Luft zu verteilen, die er über seine Länge in im Wesentlichen homogenen Weise ausströmen lässt.

2. System (3) nach Anspruch 1,
**dadurch gekennzeichnet, dass** die Außenhülle (19) mindestens einen Längsspalt (20A, 20B) begrenzt, der die Hülle entsprechend einer Richtung quer zur Längsrichtung (X-X) der Hülle durchquert.

3. System (3) nach Anspruch 2,
**dadurch gekennzeichnet, dass** die Richtung des Spaltes (20A, 20B) einen Winkel (α) mit einem Wert zwischen 40° und 50° in Bezug auf die Vertikale bildet, vorzugsweise einen Winkel, der 45° beträgt.

4. System (3) nach einem beliebigen der vorhergehenden Ansprüche,
**dadurch gekennzeichnet, dass** das Querschnittsverhältnis des kegelförmigen Diffusors (18) 1/10 pro Meter über die Länge des Diffusors misst.

5. System (3) nach einem beliebigen der vorhergehenden Ansprüche,
**dadurch gekennzeichnet, dass** der kegelförmige Diffusor (18) eine Porosität mit einem Wert zwischen 25 und 40 % aufweist.

6. System (3) nach einem beliebigen der vorhergehenden Ansprüche,
**dadurch gekennzeichnet, dass** die oder jede Behandlungseinheit (4) stromaufwärts zu dem oder den Verteilerkanälen (15, 16, 17) Mittel (8) zum Filtern der Luft einschließt, die vorzugsweise mehrere Filterelemente (9, 10, 11) umfassen, die angepasst sind, aufeinander folgende Verunreinigungen mit fallender Größe zu filtern.

7. System (3) nach einem beliebigen der vorhergehenden Ansprüche,
**dadurch gekennzeichnet, dass** die oder jede Behandlungseinheit (4) Mittel (6) zur Wiederaufnahme von Luft von der Seite des Luftvolumens (V₄) entgegengesetzt zu dem oder den Verteilerkanälen (15, 16, 17) einschließt.

8. System (3) nach einem beliebigen der vorhergehenden Ansprüche,
**dadurch gekennzeichnet, dass** die oder jede Behandlungseinheit (4) eine Kammer (7) zum Mischen von neuer von außen zu dem Fahrgastraum (1) gewonnener Luft und mit Luft, die von den Wiederaufnahmemitteln (6) kommt, einschließt.

9. System (3) nach Anspruch 8,
**dadurch gekennzeichnet, dass** es Mittel (7A, 30, 32) zur Steuerung der Anteile an neuer und an rückgeführter Luft umfasst, die in die Mischkammer (7) zugelassen wird, wobei die Mittel abhängig von mindestens der Anzahl von Personen geregelt werden, die in dem Luftvolumen (V₄) vorhanden sind.

10. System (3) nach einem beliebigen der vorhergehenden Ansprüche,
**dadurch gekennzeichnet, dass** die oder jede Behandlungseinheit (4) Mittel zum Heizen (13) und/oder Abkühlen der zu behandelnden Luft einschließt.

11. System (3) nach Anspruch 8 und 10,
**dadurch gekennzeichnet, dass** es elektronische Mittel (30) zur Regelung der oder jeder Behandlungseinheit (4) umfasst, die angepasst sind, um gleichzeitig die Verhältnisse an neuer Luft und an rückgeführter Luft, die der Mischkammer zugeführt werden, den Durchsatz der behandelten Luft, die an den oder die Verteilungskanäle (15, 16, 17) geschickt wird, und die an die Mittel zum Heizen (13) und/oder zum Kühlen (14) gelieferte Energie abhängig von mindestens der Anzahl von Personen, die in dem der Behandlungseinheit zugeordneten Luftvolumen (V₄) vorhanden sind, vom Sonnenlicht, dem der Fahrgastraum (1) unterworfen ist, von der Außenumgebungstemperatur und einem Sollwert, der für die Temperatur der behandelten Luft bestimmt wird, zu steuern.

12. Verkehrsmittel (2), das einen Fahrgastraum (1) einschließt, ausgerüstet mit einem System zur Behandlung von Luft entsprechend einem beliebigen der vorhergehenden Ansprüche.

13. Verfahren zur Behandlung von Luft eines Fahrgastraumes (1) eines Verkehrsmittels (2), bei dem man mindestens einen Verteilerkanal (15, 16, 17), der in lotgerechter Richtung zu einem ersten Teil (V₁₆) eines Luftvolumens (V₄) des Fahrgastraumes angeordnet ist, mit behandelter Luft versorgt und man die behandelte Luft längs des oder jedes Kanals abführt, indem mindestens ein Teil dieser Luft, austretend aus dem Kanal, zu einem zweiten Teil (V_{16A}, V_{16B}) eines Luftvolumens (V₄), verschieden zu dem ersten Teil (V₁₆), gerichtet wird, um mindestens einen turbulenten Strom (22A, 22B) in dem ersten und zweiten Teil des Luftvolumens zu erzeugen,
**dadurch gekennzeichnet, dass** man die den oder jeden Verteilerkanal (15, 16, 17) versorgende Luft in im Wesentlichen homogener Weise über die Länge des Kanals verteilt, indem ein Diffusor (18) verwendet wird, mit dem der Kanal im Inneren ausgerüstet ist und der aus einem porösen Gewebe besteht und eine im Wesentlichen kegelförmige Form mit einer Längsachse (X-X) aufweist, die entsprechend der Länge des Kanals angeordnet ist.

14. Verfahren nach Anspruch 13,
**dadurch gekennzeichnet, dass** die Ausströmgeschwindigkeit der Luft aus dem oder jedem Verteilerkanal (15, 16, 17) zwischen 5 und 10 m/s liegt.
